# EUROPEAN PATENT APPLICATION

(11) **EP 4 385 616 A1**
(43) Date of publication of application: **19.06.2024**
(21) Application number: 22383224.7
(22) Date of filing: 15.12.2022
(51) Int. Cl.: B01J 13/16, C10G 75/00, C10L 1/00, C23F 11/00

(54) **MICROCAPSULES FOR CONTROLLED RELEASE OF ACTIVES AGENTS, AND USE OF SAID MICROCAPSULES IN THE OIL AND GAS INDUSTRY**

(71) Applicant: Repsol, S.A., 28045 Madrid (ES)
(72) Inventor: Diestre Redondo, Ernesto Iván, Móstoles (ES); Masa Lorenzo, María de la O, Móstoles (ES); Rodríguez Alonso, Raquel, San Sebastián (ES); Villaverde Cendoya, Haizea, San Sebastián (ES)
(74) Representative: Balder IP Law, S.L.

(57) **Abstract**

A microcapsule for controlled release of at least one active agent, wherein said microcapsule comprises a core and a polymeric shell, wherein the polymeric shell comprises a nanocomposite of a (co)polymer of at least one (met)acrylic ester monomer and a nanoclay, preferably an organically modified nanoclay, and the core comprises the at least one active agent and a first carrier. The present invention also relates to a method of preparation of the microcapsules and the use thereof. Also, the present invention relates to a method to prevent the corrosion in crude oil refineries.

## Description

### TECHNICAL FIELD

The present invention relates to microcapsules for controlled release of active agents, in particular active agents to be used in the oil and gas industry. Microcapsules of the invention comprise a core and a polymeric shell, wherein the polymeric shell comprises a nanocomposite of (co)polymer of at least one (met)acrylic ester monomer and a nanoclay, preferably an organically modified nanoclay, and the core comprises the at least one active agent and a first carrier.

The present invention also relates to a method of preparation of the microcapsules and the use thereof. Also, the present invention relates to a method to prevent the corrosion in crude oil refineries.

### STATE OF THE ART

The oil and gas industry typically resorts to the employment of additives to improve the properties of the finished products produced thereon. Typically, these additives may have three basic roles: a) enhance existing products properties with, for example, antioxidants, corrosion inhibitors, anti-foam agents and demulsifying agents; b) supress undesirable products properties with, for example, pour-point depressants and viscosity index (VI) improvers; and/or c) impart new properties to products with, for example, extreme pressure (EP) additives, detergents, metal deactivators and tackiness agents. Additives which improve some properties should not deteriorate other properties of products and its quality in general. For this, a balance between the quantity of the product additive used and their performance must be achieved.

Regarding process additives, one of the main applications of process additives is to prevent pipeline corrosion in the oil and gas industries. Pipeline corrosion occurs naturally and continuously. It refers to the degradation and destruction of the materials conforming the said pipeline caused by chemical interactions between those materials and environmental media. This corrosion can have a negative impact on the integrity and longevity of the pipeline, with the subsequent risk of accidents resulting from leakages and fractures. Additionally, said corrosion can also have a negative effect on the quality of the products obtained, which may be contaminated because of the corrosion of pipelines. That is why corrosion of oil and gas pipelines represents a serious problem. In fact, corrosion has been identified as the main challenge affecting the efficiency of the oil and gas pipelines. Various types of corrosion can occur, including sulphidic and/or naphthenic acid corrosion. Both corrosion types occur at high temperatures (220° C to 400° C) and are common in refinery facilities where crude oil and distillation fractions are processed. Currently, there is a need to devise ways of overcoming the threat, especially in preventing the occurrence of accidents resulting from leakages and fractures.

Corrosion inhibitors are one of the additives conventionally used to reduce or avoid corrosion in oil and gas industries, particularly in refineries. More specifically, corrosion inhibitors are frequently used to protect facilities against sulphidic and/or naphthenic acid corrosion. Corrosion inhibitors containing phosphorous are effective in reducing naphthenic acid corrosion.

Other additives commonly employed in the oil and gas industry are pour point depressants. Liquid hydrocarbons used as lubricant oils or fuels must flow at low temperatures. The flow of these fluids containing high wax content could be reduced at temperatures below the freezing point. When wax crystallizes at low temperatures the fluid sets up and does not pour. The pour point depressant additives change the wax crystal structure improving the flow of the fluid.

Moreover, fouling is the accumulation of organic or inorganic materials from a hydrocarbon fluid in process units. Fouling affects the operation of refinery facilities by reducing heat transfer. Moreover, an increase in pressure drop across the unit (piping) is usually a common consequence of fouling. Antifoulants are products to reduce the deposition of unwanted materials in process units.

Nevertheless, there is a multitude of issues associated with the conventional application of these additives. Particularly, the application of corrosion inhibitors in pipelines present important drawbacks such as, for example, the fouling of pipelines and catalysts due to the deposition of products coming from the use of high dosages of additives or the lack of protection against corrosion when the additive injection point is far away from the point where the additive is needed. Accordingly, it is important to develop strategies that allow to use these corrosion inhibitors in an amount minimal but effective to prevent corrosion in petroleum industries.

Currently, it remains a challenge to develop more effective approaches that overcome these drawbacks.

In the last decades, there is a tendency in the microencapsulation of active substances to protect them from the surrounding environment and subsequently release them in a controlled manner. The microencapsulation of active substances has expanded into a variety of industrial sectors, such as agricultural (pesticide release), food (masking odors/taste), textile and cosmetics (fragrance release), process (micro/nanoreactors, handling), defense (self-healing materials) and coatings (self-healing, antifoulant release). However, few studies are known regarding the microencapsulation of active substances in the oil and gas industry.

For instance, WO2015061522A1 relates to self-healing materials. More specifically, this patent application discloses microencapsulated self-healing agents that may be released into the site of damage, where they may polymerize and restore the functional capabilities of the matrix such as a coating, sealant, reinforced polymer composite or adhesive matrix. In some embodiments, the self-healing agent may form a protective layer bonded to a metal substrate. In these embodiments, the microcapsules also may contain a corrosion inhibitor that helps to protect the substrate after a healing event has taken place. According to the disclosure of this patent document, the microcapsules therein described comprises a polyurethane or epoxy coating.

In a neighboring field to the oil and gas industry field, WO2014046876 A1 describes microcapsules comprising (i) a core containing a polar solvent and one or more polar lubricating oil additives having solubility in the polar solvent, and (ii) optionally a shell or membrane enclosing said core. The microcapsules are dispersed in the lubricating oil such that the lubricating oil exhibits improved anti-wear performance and improved engine fuel efficiency. The improved efficiency is enabled by the reduction of friction and improved elastohvdrodynamic lubrication (EHL) film formation while using lower viscosity base stocks. According to this disclosure, the shell or membrane enclosing the core of the microcapsules described therein, if present, is polymeric and is selected from polystyrenes, polyesters, polyurethanes, polyamides, polyureas, or the copolymers thereof; polyacrylonitriles, vinyl resins or aminoplast resins. Moreover, the microcapsules this document discloses are designed to have good heat resistance and resist temperatures of the order of 150°C-160°C. However, this range of temperature may not be sufficient for the requirements of the microcapsules in the field of the oil and gas industry, since they should resist much higher temperatures ranges due to nature of the process performed thereof.

US20120129742 A1 concerns microcapsules including a core containing one or more alkali metal borates, optionally hydrated, dispersed in one or more lubricating base oils of mineral, synthetic or natural origin, and a polymer shell. This document also discloses a lubricating oil including microcapsules and the use of microcapsules as anti-wear and/or extreme pressure additive for lubricant compositions. According to this disclosure, the microcapsules preferably comprise a polymeric shell of polyurea. The microcapsules this patent document discloses are likewise designed to have good heat resistance, however, they neither resist temperatures higher than 150°C to 160°C which, as mentioned above, may be insufficient for most process carried out in the oil and gas industry.

Thus, microencapsulation of active substances in the oil and gas industry such as corrosion inhibitors, pour point depressants or antifoulants represents an attractive approach, but the chemical environment and mechanical conditions typically used in the petroleum industry, particularly in refineries, can be detrimental to the stability and effectivity of microcapsules and, therefore, there is still a need of developing new strategies that overcome these and the foregoing mentioned drawbacks.

### SUMMARY OF THE INVENTION

The present invention provides a microcapsule for controlled release of at least one active agent, wherein said microcapsule comprises a core and a polymeric shell, wherein the polymeric shell comprises a nanocomposite of a (co)polymer of at least one (met)acrylic ester monomer and a nanoclay, preferably an organically modified nanoclay, more preferably a montmorillonite modified with a quaternary ammonium salt (also known as "cloisite"), and the core comprises at least one active agent and a first carrier.

Without being bound to any theory, the structural composition of the polymeric shell described herein contributes to improving the thermal and/or mechanical stability of the microcapsule, rendering the microcapsule according to the invention surprisingly suited for encapsulating active agents and releasing them in a controlled manner, in particular at a temperature of 250°C to 350 °C and/or a shear stress higher than 1000 Pa, preferably equal to or higher than 4000 Pa and even more preferably equal to or higher than 8000 Pa. Advantageously, the temperature and shear stress required to effectively release the encapsulated active agent(s) may be controlled with the amount of nanoclay, preferably organically modified nanoclay, more preferably montmorillonite modified with a quaternary ammonium salt, present in the polymeric shell. The more the amount of said nanoclay, the highest the temperature and/or shear stress required to open the microcapsule and release the active agent(s).

The microcapsule described herein is particularly suitable for encapsulating active agent(s) typically used in the oil and gas industry such as corrosion inhibitors, antioxidants, friction promoters, metal passivators, viscosity modifiers, pour point depressants, antifoulants, defoamers, demulsifiers or a combination thereof, since the structural composition of the polymeric shell remains stable even when the microcapsule is dispersed in a hydrocarbon stream typically used in a refinery such as a naphtha stream and subjected to the severe thermal and mechanical conditions used in said refineries. Besides, the microcapsule according to the invention can effectively release said active agent(s) in a controlled manner, in particular at a temperature of 250 °C to 350 °C and/or a shear stress of higher than 1000 Pa, preferably equal to or higher than 4000 Pa and even more preferably equal to or higher than to 8000 Pa.

The present invention further relates to a method of preparation of the microcapsule as described in this document, and the microcapsule obtained or obtainable by said method.

Furthermore, the present invention relates to the microcapsule according to the invention comprising a corrosion inhibitor as active agent to prevent corrosion in refineries during the processing of crude oil, and a method to prevent the corrosion in crude oil refineries comprising i) providing a dispersion of said microcapsules in a second carrier and ii) injecting the dispersion in a hydrocarbon stream of the refinery.

These and other aspects of the invention are further described in the detailed description of the invention, here below.

### DETAILED DESCRIPTION OF THE INVENTION

One aspect of the invention relates to a microcapsule for controlled release of at least one active agent, wherein said microcapsule comprises a core and a polymeric shell, wherein the polymeric shell comprises a nanocomposite of a (co)polymer of at least one (met)acrylic ester monomer and a nanoclay, preferably an organically modified nanoclay, and the core comprises the at least one active agent and a first carrier.

In the context of the present invention the term "microcapsule" is used to refer to particles comprising an inner core, which typically is substantially central, containing the at least one active substance in a first carrier, wherein said inner core is covered with a polymeric shell constituting a capsule membrane.

In the context of the present invention the term "nanocomposite" is used to refer to a combination of two or more materials - of which at least one is a nanomaterial - with different physical and chemical properties. Typically, nanocomposite materials exhibit properties that exceed, sometimes drastically, the capabilities of the sum of their constituent parts.

The microcapsule as defined herein may typically comprise a polymeric shell, wherein said polymeric shell comprises a nanocomposite of a (co)polymer of at least one (met)acrylic ester monomer and a nanoclay, preferably an organically modified nanoclay, wherein the at least one (co)polymer may comprise repeating units of Formula (I) 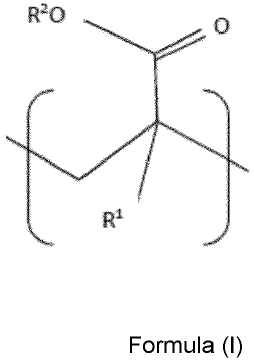 wherein
R¹ is hydrogen or methyl, and
R² is selected from a group consisting of an optionally substituted linear C₁-C₁₈ alkyl group, an optionally substituted C₆-C₁₀ cycloalkyl group and a glycidyl group.

In formula (I) R² may be an optionally substituted linear C₁-C₁₂ alkyl group, more preferably an optionally substituted linear C₁-C₄ alkyl group. Alternatively, R² may be cyclohexane or tricyclodecane.

R² may be substituted or not. In those embodiments wherein R² is substituted, said substitution is preferably a hydroxyl group.

The (co)polymer may be obtained from polymerization of one or more monovinyl monomers selected from the group consisting of methyl methacrylate (MMA), ethyl acrylate, ethyl methacrylate, hydroxyethyl methacrylate, propyl methacrylate, glycidyl methacrylate, butyl acrylate, butyl methacrylate, lauryl methacrylate, stearyl methacrylate and cyclohexyl acrylate. Particularly, said monovinyl monomer may be selected from the group consisting of methyl methacrylate (MMA), butyl acrylate (BA), butyl methacrylate (BMA), lauryl methacrylate (LMA), stearyl methacrylate (SMA) and mixtures thereof.

In preferred embodiments, the (co)polymer of at least one (met)acrylic ester monomer may be poly(methyl methacrylate) (PMMA) or, alternatively, a copolymer of methyl methacrylate (MMA) and a second (met)acrylic ester monomer, preferably a monomer resulting in repeating units of formula (I) as described in this document, and more preferably butyl acrylate (BA), butyl methacrylate (BMA) or lauryl methacrylate (LMA). In those embodiments wherein the (co)polymer is obtained by polymerization of a combination of MMA and a second (met)acrylic ester monomer, they may be used in a weight ratio MMA:second monomer of 50:50 to 95:5, preferably 90:10 to 95:5.

In more preferred embodiments of the microcapsules described herein, the (co)polymer of at least one (met)acrylic ester is a copolymer obtained by polymerization of methyl methacrylate (MMA) and a second monomer selected from butyl methacrylate (BMA) and butyl methacrylate (BMA) in a weight ratio MMA:BA or MMA:BMA of 95:5.

In other more preferred embodiments of the microcapsules described herein, the (co)polymer of at least one (met)acrylic ester is a copolymer obtained by polymerization of methyl methacrylate (MMA) and lauryl methacrylate (LMA) in a weight ratio MMA:LMA of 90:10.

It has been surprisingly found that microcapsules according to the invention wherein the (co)polymer of at least one (met)acrylic ester monomer is PMMA or a copolymer obtained by polymerization of MMA and a second (met)acrylic ester monomer as described herein have the required thermal and/or mechanical stability, in particular when dispersed in a hydrocarbon stream typically used in a refinery such as a naphtha stream, so that said microcapsules can be exposed to the severe thermal and mechanical conditions typically used in crude oil refineries. Another important advantage of these microcapsules is that they can be opened to effectively release the active agent(s) encapsulated in the core in a controlled manner, (*i.e*., at a desired activation temperature and/or shear stress sub-range) within a broadest range of 250 °C to 350 °C and/or a shear stress higher than 1000 Pa. Therefore, the microcapsules according to the invention can be used to more efficiently apply at least one active agent, in particular an active agent typically used in the oil and gas industry such as corrosion inhibitors, antioxidants, friction promoters, metal passivators, viscosity modifiers, pour point depressants, antifoulants, defoamers, demulsifiers and a combination thereof, where said active agent is required, thus reducing the required amount of active agent and, consequently, avoiding the over-additivation and problems associated with it.

In the context of the invention, the term "nanoclay" refers to a phyllosilicate or sheet structure typically having a thickness of about 1 nm and a size of about 50-150 nm in one dimension (Saba, N., Jawaid, M., & Asim, M. (2016). Recent advances in nanoclay/natural fibers hybrid composites. Nanoclay reinforced polymer composites, 1-28). Depending on morphology and chemical composition of nanoclay, various classes of nanoclay may be distinguished illite, halloysite, bentonite, kaolinite, montmorillonite, hectorite and chlorite (Pavlidou, S., & Papaspyrides, C. D. (2008). A review on polymerlayered silicate nanocomposites. Progress in polymer science, 33(12), 1119-1198). Preferably, the nanoclay comprised in the microcapsule of the invention is a montmorillonite.

In preferred embodiments, the nanoclay comprised in the microcapsule according to the invention has been organically modified to improve the compatibility with the polymer by increasing the interfacial interaction between the nanoclay and the polymer matrix.

In several preferred embodiments, the microcapsule as described herein may comprise montmorillonite as nanoclay, preferably a montmorillonite (MMT) modified with a quaternary ammonium salt (also known as cloisite or organomodified cloisite in the art).

In more preferred embodiments, the microcapsule according to the invention may comprise a MMT modified with a quaternary ammonium salt having one or more long alkyl chains (in particular, C₁₄-C₁₈) such as tallow or hydrogenated tallow. More preferably, the quaternary ammonium salt of said organomodified MMT has a formula (II): 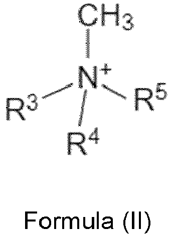 wherein
R³ is selected from a group consisting of H and a C₁-C₂ linear alkyl, optionally substituted with -OH, preferably methyl or hydroxyethyl,
R⁴ is selected from a group consisting of hydrogenated tallow (-HT), C₁-C₈ alkyl linear or branched, optionally substituted with -OH, or benzyl, and
R⁵ is selected from a group consisting of tallow (-T) and hydrogenated tallow (-HT).

The terms "tallow" (T) and "hydrogenated tallow" (HT) are broadly known in the art.

These organomodified forms of MMT nanoclay with a quaternary ammonium salt are commonly known in the art as "cloisite". Typically, they are commercially available by the company BYK. However, if required, these organomodified MMT can also be prepared from natural MMT clay by methods commonly known in the art. Suitable cloisites that can be used for the purpose of the invention as described herein are the following:

| Clay | Cloisite 15A | Cloisite 20A | Cloisite 93A |
|---|---|---|---|
| Structure of the organomodifier | 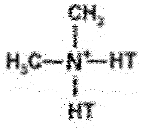 | 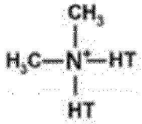 | 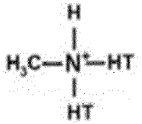 |
| | | | |

| Clay | Cloisite 25A | Cloisite 30B | Cloisite 10A |
|---|---|---|---|
| Structure of the organomodifier | 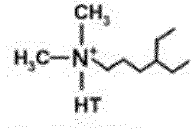 | 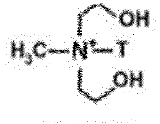 | 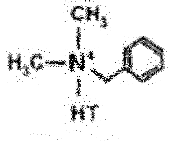 |

The microcapsules described herein preferably comprises cloisite 30B as nanoclay.

In some embodiments, the microcapsule described herein may contain the nanoclay, preferably the organomodified nanoclay, in an amount of about 3 to 15% by weight, preferably of about 6 to 10 % by weight, with respect to the total weight of monomer, active agent in a first carrier and, optionally, a crosslinking agent used to obtain the microcapsule by polymerization, preferably according to the method described herein. Amounts within these ranges favour the interfacial interaction between the nanoclay and the polymer matrix, improving even more the thermal and/or mechanical stability of the microcapsule of the invention and allowing an effective controlled release of the active agent at a higher temperature and/or shear stress. Thus, an amount of nanoclay lower than about 3 % by weight may not be enough to improve the thermal or mechanical resistance of the microcapsules. On the other hand, an amount of nanoclay higher than about 15 % by weight may involve unnecessary costs, since an excess of cloisite would not be completely linked to the shell and, therefore, it would not help to improve the performance of the microcapsules.

The active substances or active agents used herein can be selected from the group consisting of corrosion inhibitors, antioxidants, friction promoters, metal passivators, viscosity modifiers, pour point depressants, antifoulants, defoamers, demulsifiers and a combination thereof.

In the context of the invention the terms "active substance" or "active agent" are used indistinctly.

In preferred embodiments, the microcapsule as described in this document comprises a corrosion inhibitor containing phosphorus, since it is known that this type of corrosion inhibitor is effective in reducing naphthenic acid corrosion. More preferably, the corrosion inhibitor is an alkyl phosphate such as 2-ethylhexyl phosphate.

As described herein, the microcapsules comprise a core that contain the active agent, preferably a corrosion inhibitor, in a first carrier (i.e., an active agent mixture or formulation). Said mixture of active agent in a first carrier may be comprised in the microcapsule of the invention in an amount of about 1 wt.% to 75 wt.%, preferably of about 5 wt.% to 55 wt.%, more preferably of about 10 wt.% to 50 wt.%, even more preferably of about 40 wt.% to 50 wt.% based on the total weight of monomer, polymerization initiator, active agent in the first carrier and, optionally, crosslinking agent used to obtain the microcapsule by polymerization, preferably according to the method described herein. In particular embodiments, the active agent mixture may comprise of about 20 wt.% to about 70 wt.% of active agent with respect to the weight of the active agent mixture.

In the context of the invention, the first carrier is a liquid medium suitable to carry the active substance, preferably said first carrier is able to dissolve, disperse or suspend the active substance. As a mode the example, this first carrier may be a non-polar solvent such as, for example, light aromatic naphtha, xylene, toluene or any refined hydrocarbon that makes the formulation (i.e., the mixture of active agent and first carrier) fluid at working temperatures at which the formulation is handled, in particular at room temperature (typically about 20-30 °C).

In the context of this invention, the term "light aromatic naphtha" means a complex combination of aromatic hydrocarbons from distillation of aromatic streams that comprises predominantly C₈-C₁₀ aromatic hydrocarbons and boiling in the range of about 135 °C to 210 °C.

In preferred embodiments of the invention, the microcapsules described herein comprise a corrosion inhibitor as active substance, preferably the corrosion inhibitor is an alkyl phosphate and, more preferably 2-ethylhexyl phosphate, and the first carrier is a non-polar solvent, in particular a hydrocarbon mixture typically used in refineries such as naphtha, more specifically light aromatic naphtha.

The size of the microcapsules can range from 1 µm to mm depending upon several factors like the components used to obtain the microcapsules (i.e., (met)acrylic ester monomer, nanoclay and/or active agent) and the manufacturing process used. In particular, method parameters such as the stirring speed or the position of the agitator may have an influence on the microcapsules size.

In preferred embodiments, the microcapsules described herein may have a diameter of at least about 1 µm, preferably of about 1 µm to about 300 µm. In those embodiments of the invention wherein the (co)polymer is polymethylmethacrylate (PMMA) and, preferably, the microcapsule is obtained by the method described in this document, the diameter may be of about 1 to about 200 µm, as measured by SEM.

The size and morphology of the microcapsules can be analysed by scanning electron microscopy (Jeol JSM-5920LV). More specifically, samples can be measured as dried products. SEM micrographs can be obtained using a secondary electron detector. To avoid electron loading of the samples, the surface can be sputtered with a gold layer. Preferably, different regions can be analysed to assure a representative characterization. Besides, the size of the microcapsule can be analysed by Laser diffraction analysis, also known as laser diffraction spectroscopy, a technology that utilizes diffraction pattern of a laser bean passed through any object ranging from nanometres to millimetres in size to quickly measure geometrical dimensions of a particle.

The microcapsules described herein may be dispersed in a second carrier (also referred to as "second liquid medium" in this document) which is a liquid medium compatible with hydrocarbons, in particular, with a hydrocarbon stream typically used in refineries such as naphtha. Said second carrier may be non-polar solvent such as, for example, light aromatic naphtha, xylene, toluene, or any refined hydrocarbon in which the microcapsules may be dispersed at the working temperature at which said dispersion is handled, in particular at room temperature (typically about 20-30 °C).

In preferred embodiments of the invention, the composition of the first carrier is essentially equal to the second carrier wherein the microcapsules are dispersed.

The microcapsule described in this document comprises a polymeric shell, wherein the polymeric shell preferably comprises a nanocomposite of PMMA and MMT modified with a quaternary ammonium salt as described in this document, and a core comprising 2-ethylhexyl phosphate dispersed in a hydrocarbon mixture typically used in refineries such as naphtha. More preferably, the composition of this first carrier is essentially equal to the second carrier wherein the microcapsules are dispersed.

Alternatively, the microcapsule described in this document comprises a polymeric shell, wherein the polymeric shell preferably comprises nanocomposite of a copolymer of MMA:LMA, MMA:BA or MMA:BMA in a weight ratio of 90:10 to 95:5, and MMT modified with a quaternary ammonium salt as described in this document, and a core comprising 2-ethylhexyl phosphate dispersed in a hydrocarbon mixture typically used in refineries such as naphtha. More preferably, the composition of this first carrier is essentially equal to the second carrier wherein the microcapsules are dispersed.

According to a further aspect of the invention, it is provided a method for the preparation of the microcapsule of the invention by suspension polymerization. Typically, in a suspension polymerization process, one or more water-insoluble monomers and oil-soluble initiator(s) are dispersed in a continuous aqueous phase. The polymerization takes place within the oil droplets suspended in an aqueous phase. Thus, monomer droplets are converted into polymer particles.

Thus, the method of the preparation of the microcapsule according to the invention comprises the following steps:
a) obtaining an organic phase comprising at least one (met)acrylic ester monomer, a polymerization initiator and at least one active agent in a first carrier (i.e., active agent mixture or formulation);
b) obtaining an aqueous phase by mixing a stabilizer and a nanoclay, preferably an organomodified nanoclay, with water;
c) mixing the organic phase obtained in step a) and the aqueous phase obtained in step b) at a temperature of about 60 °C to about 95 °C, by agitation at a stirring speed of about 100 rpm to about 1000 rpm, thereby obtaining the microcapsule of the invention. The polymerization time (i.e., the period of time required to obtain the microcapsules of the invention) may be of about 2 hours to about 20 hours, preferably of about 4 hours to about 15 hours, and more preferably about 6 hours. During this polymerization time both the temperature and the stirring speed are maintained within the ranges described herein.

In the method of preparation of the microcapsule of the invention, the (met)acrylic ester monomer, the nanoclay and the active agent are as described in this document, particularly as described in relation with the microcapsule of the invention.

To prepare the organic phase of step a), the (met)acrylic ester monomer may be added in a weight amount of about 23 wt.% to about 92 wt. %, preferably of about 30 wt.% to about 87 wt.%, with respect to weight of the organic phase.

The mixture of active agent, preferably corrosion inhibitor, in a first carrier may be added to step a) of the method of preparation of the microcapsules as described herein in an amount of about 1 wt.% to about 75 wt.%, preferably of about 5 wt.% to about 55 wt.%, more preferably of about 10 wt.% to about 50 wt.%, even more preferably at about 40 wt.% to about 50 wt.%, with respect to the total weight of the organic phase prepared in said step a). In particular embodiments, the active agent mixture may comprise of about 20 wt.% to about 70 wt.% of active agent with respect to the weight of the active agent mixture.

The polymerization initiator may be an oil-soluble initiator which is preferably selected from a group consisting of an azo initiator compound and a peroxide compound. The azo initiator compound is preferably selected from 2,2-azobisisoheptonitrile, 2,2"-azoisobutyronitrile, 2,2"-azoibis-(2-methylbutyronitrile), dimethyl 2,2-azobis(2methyl propionate) and other azo initiators, whereas the peroxide compound is preferably selected from benzoyl peroxide, dilauroyl peroxide, lauroyl peroxide (LPO), tert-butyl peroxy-2-ethylhexanoate, tert-butyl peroxy diethyl acetate or tert-butylperoxy isobutyrate. More preferably, the polymerization initiator is lauroyl peroxide (LPO).

To prepare the organic phase of step a), the polymerization initiator is preferably added in a weight amount of about 0.5 wt.% to about 20 wt.%, preferably of about 2 wt.% to about 10 wt.%, more preferably of about 4 wt.%, weight amounts expressed by weight with respect to the (met)acrylic ester monomers used to prepare said organic phase.

Thus, the organic phase prepared in step a) of the method described herein may comprise a polymerization initiator in a weight amount of about 0.12 wt.% to about 18 wt. %, preferably of about 0.6 wt.% to about 9 wt. %, with respect to amount of said organic phase.

To prepare the aqueous phase of step b) a stabilizer is required. This stabilizer helps to stabilize the emulsion and, therefore, improves the polymerization process and allows the formation of the microcapsule of the invention. Typically, suitable stabilizers to be used in the method described herein are dispersants and, therefore, in the context of the invention, the terms dispersant, suspension dispersant and stabilizer are used indistinctly.

In the method of preparation of the microcapsules as described herein, the stabilizer preferably is a non-polymerizable surfactant. Said stabilizer can be selected from a group consisting of barium sulfate, calcium sulfate, calcium phosphate, magnesium hydroxide, aluminium hydroxide, magnesium carbonate, calcium carbonate, aluminium oxide, titanium dioxide, polyvinyl alcohol (PVA), polyvinylpyrrolidone (PVP), cellulose ester, natural gums, gelatine or methyl cellulose. Preferably, the stabilizer agent is selected from polyvinyl alcohol (PVA), polyvinylpyrrolidone (PVP) and a combination thereof.

The amount of stabilizer may preferably be of about 0.1 wt. to about 20 wt. %, more preferably of about 2 wt. to about 10 wt.%, related to the organic phase, wherein the organic phase weight comprises the weight of (met)acrylate monomers, polymerization initiator, optionally crosslinker agent, and active agent in the first carrier added to prepare the organic phase of step a). In more preferred embodiments, the amount of stabilizer is about 10.0 wt.% related to the organic phase.

In more preferred embodiments, the stabilizer is polyvinyl alcohol in an amount of about 5 wt. % to about 10.0 wt. % related to the organic phase.

In the method of preparation of the microcapsules according to the invention, the nanoclay as described in this document, preferably organomodified nanoclay, is incorporated within the aqueous phase and due to its nature, self-assembles at the liquidliquid interface. In those embodiments of the invention wherein the nanoclay is a MMT modified with a quaternary ammonium salt (also known as cloisite in the art), said nanoclay may also help to stabilize the emulsion and, therefore, improve polymerization. This nanoclay may be added to step b) in an amount of about 3 wt.% to about 15 wt. %, preferably of about 6 wt.% to about 10 wt. %, with respect to the weight of monomer, active agent in a first carrier and, optionally, a crosslinking agent used to obtain organic phase of step a).

Thus, considering that the organic phase prepared in step a) of the method described herein may comprise a polymerization initiator in a weight amount of about 0.12 wt.% to about 18 wt. %, preferably of about 0.6 wt.% to about 9 wt. %, with respect to amount of said organic phase, the nanoclay as defined in this document may be added to step b) in an amount of about 2 wt.% to about 15 wt. %, preferably of about 5 wt.% to about 10 wt. %, with respect to the weight of organic phase obtained in step a).

The method of preparation of the microcapsules as described herein comprises a step c) of mixing the organic phase and the aqueous phase by agitation. For this, the organic and the aqueous phases may be prepared simultaneously, e.g., in parallel, or one after the other, in sequence. Then, both phases may be transferred to a polymerization reactor. The reactor may be equipped with reflux condenser, stirrer, sampling device and nitrogen inlet. The reactor may be heated to a predetermined temperature of about 60 °C to about 95 °C, preferably to about 70° C, while maintaining the mixture in agitation. The stirring speed may range from about 100 rpm to about1000 revolutions per minute (rpm), preferably from about 200 rpm to about 750 rpm, more preferably at about 250 rpm. Then, these conditions are maintained for a period (i.e., a polymerization time) so that a polymerization process takes place thereby obtaining the microcapsules of the invention.

The polymerization time may depend on the reaction conditions and reactants used. In preferred embodiments, said polymerization time may be of about 2 hours to about 20 hours, preferably of about 4 hours to about 15 hours, more preferably of about 5 hours to about 10 hours and even more preferably about 6 hours. For instance, for a reaction temperature of 70 °C, and stirring speed of 250 rpm, the polymerization time for obtaining microcapsules wherein the polymeric shell comprises a nanocomposite of PMMA and cloisite may be 6 hours.

In the method of preparation of the microcapsules described herein, the oil droplets obtained during the suspension polymerization process conform the microcapsules of the invention. These oil droplets may be controlled by selecting the type and speed of agitation, as well as the volume fraction of the organic phase and the type and concentration of the stabilizer. The type of agitation depends on the agitator used, examples of suitable agitators are turbine stirrer, in particular a turbine stirrer with fourth blades.

In preferred embodiments, the method of preparation of the microcapsules described herein further comprises adding a crosslinker agent to obtain the organic phase of step a). Thus, according to these preferred embodiments, step a) of the method comprises mixing at least one (met)acrylic ester monomer, a polymerization initiator, a cross-linker agent and an active agent in a first carrier. The presence of this crosslinker agent, in particular in a range of about 7 wt.% to about 43 wt.%, preferably of about 10 wt.% to about 22 wt.%, with respect to total weight of monomers used to prepare the organic phase, is particularly advantageous because it allows to increase the amount of active agent contained in the core of the microcapsule, while maintain its thermal and mechanical stability. Suitable crosslinker agents may be, for example, pentaerythritol tetraacrylate, ethylene glycol dimethacrylate or a combination thereof.

In step a), the crosslinker agent may be added in a weight amount of about 1.15 wt.% to about 29 wt. %, preferably of about 3 wt.% to about 14 wt. %, with respect to the weight of the organic phase obtained in said step a).

In preferred embodiments, the method of preparation of the microcapsules described herein may further comprise step d), wherein the microcapsules are isolated from the microcapsule suspension obtained in step c). Said isolation may be done, for example, filtering the microcapsule suspension by a filtration method well-known in the art such centrifugation, vacuum filtration or pressure filtration.

Isolated microcapsules, optionally dried, may be dispersed in a liquid medium or carrier (second carrier). The liquid medium or second carrier is as defined herein.

The composition and structure of the microcapsules of the invention may be determined by methods known in the state of the art. As a mode of example, the composition and structure of the microcapsules may be determined by Scanning Electron Microscopy (SEM) analysis, Laser Diffraction analysis and/or Inductively coupled plasma mass spectrometry (ICP-MS).

In particular, SEM is a technique that reveals information about the sample, including external morphology (texture), size, chemical composition, and crystalline structure and orientation of the materials making up the microcapsule. Typically, SEM analysis can be performed by measuring a fraction of the microcapsules as dried products and the SEM micrographs can be obtained using a secondary electron detector. To avoid electron loading of the samples, the surface can be sputtered with a gold layer. Different regions are preferably analysed to assure a representative image. The size of the microcapsules can be determined by using the dimension bar that appears in the SEM image or with the software of the SEM instruments that typically allows to measure the size. The results obtained by SEM revealed that the microcapsules of the invention comprise a polymeric shell and a core comprising the active substance.

Moreover, the size of the microcapsules described herein may be determined by laser diffraction analysis, also known as laser diffraction spectroscopy. Laser diffraction analysis or diffraction spectroscopy is a technology that utilizes diffraction patterns of a laser beam passed through any object ranging from nanometres to millimetres in size to quickly measure geometrical dimensions of a particle. Briefly, the laser diffraction analysis can be performed by diluting the dried microcapsules in toluene in a proportion of 1 in 10 and measuring the size of the microcapsules by comparing the diffraction pattern with the calibration pattern of the testing device.

Further, ICP-MS is an analytical technique used to measure and identify elements within a sample matrix based on the ionization of the elements contained in said sample. ICP-MS analysis can be performed by digesting the microcapsules in an acidic medium at conditions of temperature and pressure known by the skilled person. After the digestion of the microcapsules, a fraction of the resulting sample can be injected to the ICP-MS instrument and the total content of phosphorous, alongside other elements present in the microcapsules can be determined.

It has been advantageously found that the microcapsules according to the invention may be suitable used directly as obtained by a method as described herein and, therefore, requires no further treatment.

Accordingly, the instant invention also relates to the microcapsules obtained by or obtainable by the method described herein.

In particular embodiments, the method of preparing the microcapsules may comprise the following steps:
a) obtaining an organic phase comprising:
   - about 23 wt.% to about 92 wt.% of at least one (met)acrylic ester monomer as described in this document, preferably MMA;
   - about 0.12 wt.% to about 18 wt. % of a polymerization initiator, wherein the weight ratio of polymerization initiator to (met)acrylic ester monomer is 0.5:99.5 to 20:80,
   - 0 wt.% to about 40 wt. % of a crosslinker agent, wherein the weight ratio of crosslinker agent to (met)acrylic ester monomer is 7:93 to 43:57; and
   - about 1 wt. % to about 75 wt.% of at least active agent in a first carrier (i.e., active agent mixture or formulation),
   wherein all these amounts are expressed as weight with respect to the weight of the organic phase, and the sum of these amounts is equal to or lower than 100 %;
b) obtaining an aqueous phase by mixing:
   - about 0.1 wt. to about 20 wt. % of a stabilizer, amount expressed by weight with respect to the organic phase weight,
   - about 2 wt.% to about 15 wt.% of a nanoclay, preferably an organomodified nanoclay, and more preferably a MMT modified with a quaternary ammonium salt, wherein the amount is expressed with respect to the weight of organic phase;
c) mixing the organic phase obtained in step a) and the aqueous phase obtained in step b) at a temperature of about 60°C to about 95°C, and at stirring speed of about 100 rpm to about 1000 rpm, preferably about 200 rpm to about 750 rpm, thereby obtaining the microcapsules of the invention. The polymerization time may be of about 2 hours to about 20 hours, preferably of about 4 hours to about 15 hours, more preferably about 6 hours.

In the method described herein, the reaction mixture obtained in step c) preferably has a solid content of about 5 wt.% to about 20 wt.%, more preferably of about 7.5 wt.% to about 15 wt.%, expressed by weight with respect to the sum of the organic phase and aqueous phase weights.

In more particular embodiments, the method of preparing the microcapsules may comprise the following steps:
a) obtaining an organic phase comprising:
   - about 30 wt.% to about 87 wt.% of at least one monomer selected from:
      i.-methyl methacrylate (MMA), and
      ii. a combination of methyl methacrylate (MMA) and a second monomer selected from butyl acrylate (BA), butyl methacrylate (BMA) or lauryl methacrylate (LMA) in a weight ratio MMA:second monomer of 90:10 to 95:5;
   - about 0.6 wt.% to about 9 wt.% of a polymerization initiator, preferably, lauroyl peroxide (LPO), wherein the weight ratio of polymerization initiator to (met)acrylic ester monomer is 2:98 to 10:90,
   - 0 wt.% to about 19 wt.% of a crosslinker agent, preferably pentaerythritol tetraacrylate (PETRA), wherein the weight ratio of crosslinker agent to (met)acrylic ester monomer weight is 10:90 to 22:78; and
   - about 5 wt.% to about 55 wt.% of a corrosion inhibitor, preferably 2-ethylhexyl phosphate, in a first carrier,
      wherein all these amounts are expressed as weight with respect to the weight of the organic phase, and the sum of these amounts is equal to or lower than 100 %;
b) obtaining an aqueous phase by mixing:
   - about 2 wt.% to about 10 wt.% of a stabilizer, preferably PVA, amount expressed by weight with respect to the organic phase weight,
   - about 5 wt.% to about 10 wt.% of MMT modified with a quaternary ammonium salt, preferably cloisite 30B, wherein the amount is expressed with respect to the weight of organic phase;
c) mixing the organic phase obtained in step a) and the aqueous phase obtained in step b) at a temperature of about 60°C to about 95°C, preferably about 70°C, and at stirring speed of about 100 rpm to about 1000 rpm, preferably about 250 rpm, thereby obtaining the microcapsules of the invention. The polymerization time may be of about 2 hours to about 20 hours, preferably of about 4 hours to about 15 hours, more preferably about 6 hours.

The inventors have surprisingly found that the microcapsules of the invention, preferably when they are obtained or obtainable by the method described herein, have advantageous properties such as excellent thermal resistance and mechanical strength so that they are suitable to encapsulate active substances and resist the hostile chemical and mechanical environment characteristic of the petroleum industry.

The thermal and mechanical properties of a microcapsule according to the invention as described herein can be determined by methods known by a skilled person.

For example, thermal properties can be characterized by heating a mixture of the microcapsules to be tested in a petroleum stream (for instance atmospheric residue) and taking SEM images at different temperatures until the microcapsule present deformation. Thus, microcapsules are considered stable meanwhile they maintain their morphology.

In the context of the present invention the term "atmospheric residue" is used to refer to a heavy petroleum stream obtained at the bottom of the atmospheric distillation tower. That is, the heaviest of the distillation cuts out of the crude oil atmospheric distillation tower, that include all of the components of crude oil that have boiling points above about 340°C.

The inventors surprisingly found that a microcapsule according to the invention may be stable in a petroleum stream, in particular a hydrocarbon medium such as atmospheric residue, at a temperature from about 250 °C to about 350 °C. The inventors also found that at higher the concentration of nanoclay at higher the thermal resistance and, therefore, the activation temperature (i.e., the temperature required to open the microcapsule and effective release the active agent) may be easily controlled by adjusting the amount of nanoclay, preferably organomodified nanoclay, and more preferably MMT modified with a quaternary ammonium salt as described herein.

The mechanical strength of the microcapsules as described herein may be measured by using a rheometer applying different shear stress from 1000 Pa to 8000 Pa at minus 10 °C (-10°C).

The inventors surprisingly found that a microcapsule according to the invention may be stable in a petroleum stream, in particular a hydrocarbon medium such as atmospheric residue, at shear stress higher than 1000 Pa. The inventors also found that at higher the concentration of nanoclay at higher the mechanical resistance and, therefore, the activation shear stress (i.e., the shear stress required to open the microcapsule and effective release the active agent) may be easily controlled by adjusting the amount of nanoclay, preferably organomodified nanoclay, and more preferably MMT modified with a quaternary ammonium salt as described herein.

A further important advantage of the microcapsules of the invention is that they can be stored in the second carrier as described herein, since they are also stable in said second carrier, preferably a hydrocarbon medium such as naphtha, for a time period of at least 15 days without polymer agglomeration, as can be determined by laser diffraction spectroscopy.

The instant invention further relates to a use of the microcapsules as described herein for controlled release of active agents. The active agents may be selected from the group consisting of corrosion inhibitors, antioxidants, friction promoters, metal passivators, viscosity modifiers, pour point depressants, defoamers, demulsifiers and a combination thereof. The corrosion inhibitors, antioxidants, friction promoters, metal passivators, viscosity modifiers, pour point depressants, antifoulants, defoamers, demulsifiers are as defined in this document.

In the microcapsules as described herein, the release of the active agent may be triggered by thermal activation at a temperature from about 250 °C to about 350 °C, or by mechanical activation at shear stress higher than about 1000 Pa, preferably higher than about 4000 Pa, and more preferably higher than about 8000 Pa.

The inventors have found that the microcapsules as described herein may flow through a hydrocarbon stream long distances, being subject to the severe chemical and mechanical environment characteristic of the petroleum industry and finally release the active agent encapsulated therein at the desired point, i.e., when they are heated at temperature ranges of about 250 °C to about 350 °C, or when they are subjected to shear stress higher than about 1000 Pa, preferably higher than about 4000 Pa, and more preferably higher than about 8000 Pa.

In preferred embodiments, the release of the active agent is controlled by thermal activation, and the active agent is released when the microcapsules are heated at a temperature of about 250 °C to about 350 °C.

In other preferred embodiments, the release of the active agent is controlled by mechanical activation, and the active agent is released when the microcapsules is subjected to shear stress higher than about 1000 Pa, preferably higher than about 4000 Pa, and more preferably higher than about 8000 Pa.

In a further aspect, the invention relates to a use of the microcapsules as described herein, wherein the active agent is a corrosion inhibitor, in particular a corrosion inhibitor as described in this document, to prevent the corrosion in refineries during the processing of crude oil.

In preferred embodiments, the microcapsules comprise a polymeric shell comprising a nanocomposite of a (co)polymer of PMMA, a MMT modified with a quaternary salt of ammonium and an alkyl phosphate, preferably 2-ethylhexyl phosphate, as corrosion inhibitor, wherein the (co)polymer of PPMA is PMMA or a copolymer of PMMA and a second monomer selected from LMA, BA or BMA in a ratio of 90:10 to 95:5, the encapsulated corrosion inhibitor is dispersed in an hydrocarbon such as naphtha as first carrier, and said corrosion inhibitor is released at a temperature of about 250 °C to 350 °C, or a shear stress higher than about 1000 Pa.

The instant invention further relates to a method to prevent the corrosion in crude oils refineries, the method comprising:
i) providing a dispersion of the microcapsules as described herein, wherein the active agent is a corrosion inhibitor and is dispersed in a second carrier; and
ii) injecting the dispersion obtained in step i) in a petroleum stream of the refinery, in particular a hydrocarbon stream such as atmospheric residue.

In the method to prevent the corrosion in crude oil refineries according to the invention, the microcapsules are dispersed in a second carrier by methods known to the skilled person and subsequently the resulting dispersion is injected in a petroleum stream of the refinery, in particular a hydrocarbon stream such as atmospheric residue. Then, the release of the corrosion inhibitor may be trigger by thermal or mechanical activation as described in this document. Once the corrosion inhibitor is released, it is deposited on the metal surface of the pipelines, creating a barrier against aggressive agents such as naphthenic acids or sulfur, thereby protecting facilities again the corrosion caused by the said aggressive agents.

The microcapsules, corrosion inhibitor and second carrier for the purpose of this aspect of the invention may be as described in this document. Particularly, the corrosion inhibitor may by an alkyl phosphate such as 2-ethylhexyl phosphate, and/or the second carrier may be a liquid medium as described in this document.

Advantageously, the microcapsules of the invention, particularly if used in the method to prevent corrosion described herein, can be injected in a petroleum stream of a refinery, in particular a hydrocarbon stream such as atmospheric residue, so that they are transported with said stream up to the site wherein there is a risk that corrosion arise and, upon thermal or mechanical activation in determined controlled conditions, said microcapsules can effectively release the encapsulated corrosion inhibitor, thus producing the desired effect in reducing or even avoiding corrosion is this specific part of the refinery installation. Consequently, the amount of corrosion inhibitor can be significantly reduced regarding conventional methods previously used.

The term "about" when used in the context of the present invention preceding a number and referring to it, is to be understood as designating any value lying within the range defined by the number ±5%, more preferably a range defined by the number ±2%. For example, the expression "about 10" should be construed as "within the range of 9.5 to 10.5", preferably "within the range of 9.8 to 10.2".

Through the description and the claims, the word "comprises" and variations thereof are not intended to exclude other technical features, ingredients or steps. Additional advantages and features of the invention will become apparent to those skilled in the art upon examination of the description or may be learned by practice of the invention without undue burden.

### BRIEF DESCRIPTION OF THE DRAWINGS

To complete the description and provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

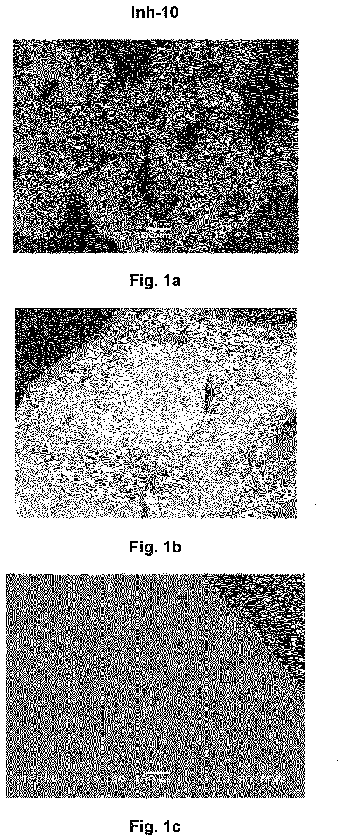

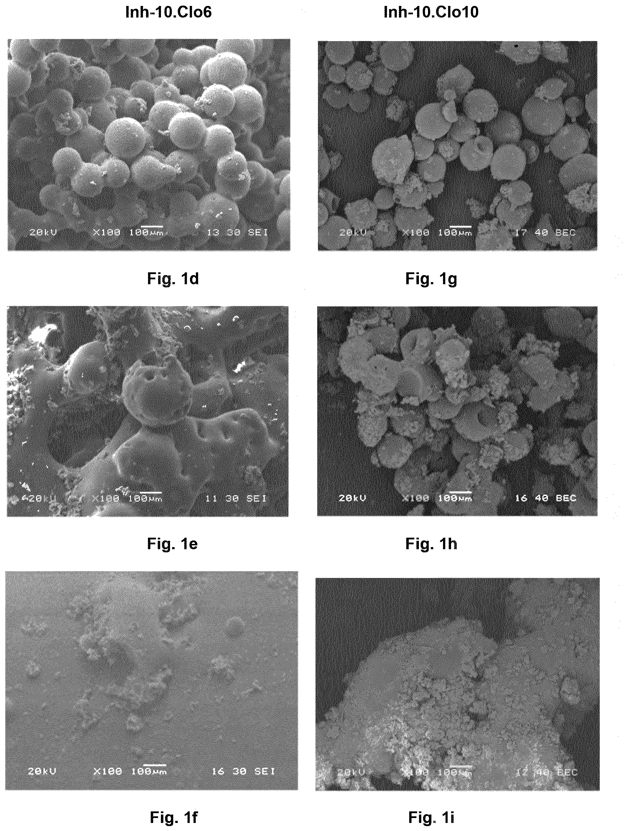

Figure 1 shows the SEM images of different microcapsules dispersed in atmospheric residue and treated at temperatures of 250 °C, 300 °C and 350 °C. Microcapsules tested were the following: microcapsules without cloisite (Inh-10, figures 1a (250 °C), 1b (300 °C) and 1c (350°C)), microcapsules according to the invention comprising 6 wt.% of cloisite (Inh10.Clo6, figures 1d (250 °C), 1e (300 °C) and 1f (350 °C)), and microcapsules according to the invention comprising 10 wt.% of cloisite (Inh10.CIo10, figures 1g (250 °C), 1h (300 °C) and 1i (350 °C)).

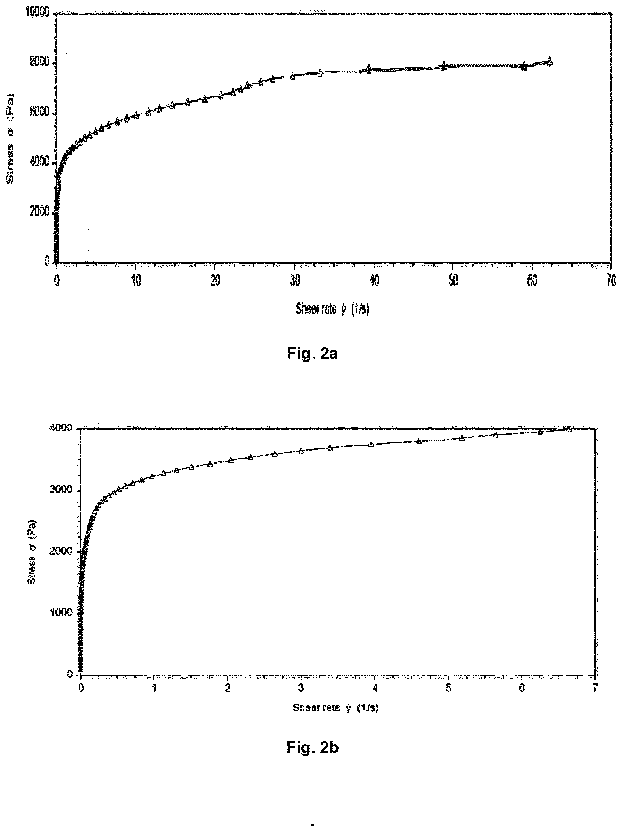

Figure 2 shows the shear stress vs shear rate curves of an atmospheric residue (Fig. 2a) and microcapsules with nanoclay according to the invention (Fig. 2b). Specifically, Fig. 2a-2b show the shear stress vs shear rate curves of the microcapsules subjected at shear stress up to 8000 Pa (Fig. 2a) and up to 4000 Pa (Fig. 2b). These figures were obtained in a rheometer using a 25mm stainless steel parallel plate and a gap of 1 mm. As rotational speed is increased both shear rate are shear stress increase.

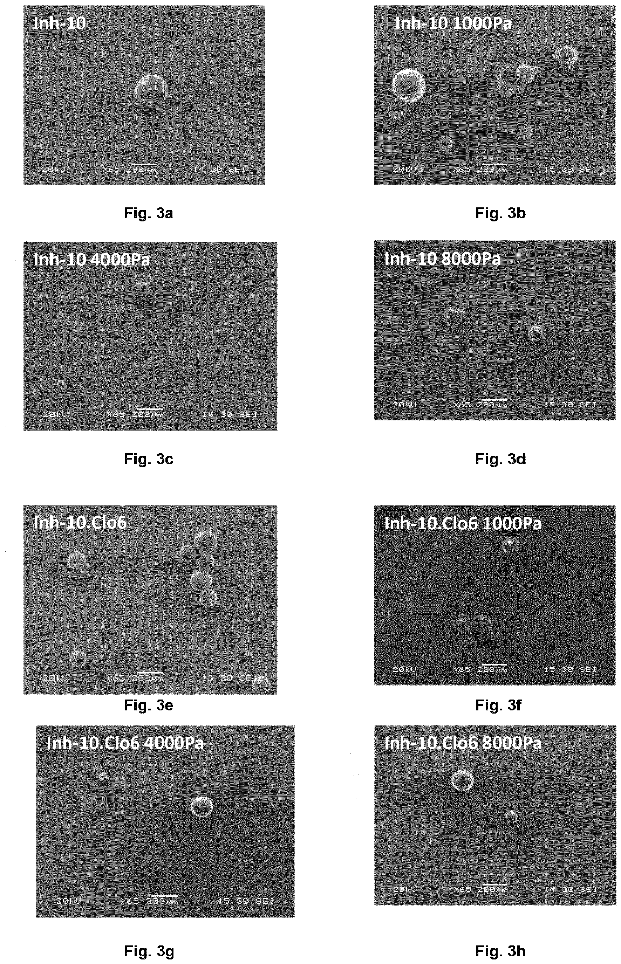

Figure 3 shows the SEM images of microcapsules subjected at shear stress of 1000 Pa, 4000 Pa and 8000 Pa of microcapsules comprising 10 wt.% corrosion inhibitor, but without cloisite (Inh-10, figures 3a (without shear stress), 3b (1000 Pa), 3c (4000 Pa) and 3d (8000 Pa)) and microcapsules according to the invention containing 6 % of cloisite (Inh10.Clo6, figures 3e (without shear stress), 3f (1000 Pa), 3g (4000 Pa) and 3h (8000 Pa)).

### EXAMPLES

In the following, the invention will be further illustrated by means of Examples. The Examples should in no case be interpreted as limiting the scope of the invention, but only as an illustration of the invention.

### REAGENTS

Reagents used in examples included below are the following:
Methyl methacrylate monomer (MMA) had a purity equal to or higher than 98.5 % and it contained equal to or less than 30 ppm of MEHQ (monomethyl ether hydroquinone) as inhibitor.
Lauroyl peroxide (LPO) had a ppurity equal to or higher than 96 % and it contained 500 ppm of MEHQ (monomethyl ether hydroquinone) as inhibitor.
Polyvinyl alcohol (PVA) had an average M_{w} 85,000-124,000, and 87-89% hydrolysed.
A mixture of 2-ethylhexyl phosphate in naphtha was used in all the examples discussed below.
Cloisite 30B used in these examples was provided by BYK and had a modifier concentration of 90 meq/100 g clay; a bulk density of 0.2283 g/cm³ (loose), 0.3638 g/cm³ (packed); a water content equal to or lower than 2.0 %; and/or the following mechanical and thermal properties (measured 5 % cloisite reinforce Nylon 6): tensile strength, ultimate of 101 MPa, an elongation at break of 8.0%, a modulus of elasticity of 4657 GPa and a deflection temperature at 0.46 MPa (66psi) of 96.0 °C.
Pentaerythritol triacrylate (PETRA) had 10-40% triester (impurity) and it contained 350 ppm of MEHQ (monomethyl ether hydroquinone) as inhibitor.

### Comparative Example 1: Synthesis of microcapsules of PMMA without nanoclay (PMMA)

Microcapsules were obtained by a suspension polymerization process.

In particular, a monomer oil phase as organic phase was obtained by mixing 30 g of methyl methacrylate (MMA) and 1.2 g of lauroyl peroxide (LPO) as initiator.

To prepare the aqueous phase 3 g of polyvinyl alcohol (PVA) were added to 270 mL of water.

Then, both phases were transferred to a polymerization reactor equipped with reflux condenser, turbine stirrer with fourth blades, sampling device and nitrogen inlet. The reactor was heated to a predetermined temperature of 70 °C. The stirring speed was 250 rpm. The time of the polymerization was 6 hours.

Subsequently, the thus obtained microcapsule suspension was filtered.

The average diameter of the self-healing microcapsules of the present disclosure was 200 µm as determined by SEM (Scanning Electron Microscopy).

### Comparative Example 2: Synthesis of microcapsules of PMMA and a corrosion inhibitor (PMMA-Inh10)

Microcapsules were obtained following the same procedure described for comparative example 1 with the exception that 3 g of a mixture of 2-ethylhexyl phosphate in naphtha were further added when preparing the organic phase (see Table 1 below).

The average diameter of the self-healing microcapsules of the present disclosure was 200 µm as determined by SEM.

### Comparative Example 3: Synthesis of microcapsules of PMMA, cross linker and corrosion inhibitor as active agent (PMMA-PETRA-Inh50)

Microcapsules were obtained following the same procedure described for comparative example 1, with the exception that a mixture of 2-ethylhexhyl phosphate in naphtha (inhibitor mixture) and PETRA (cross linker agent) were further added to prepare the organic phase. The quantities of each one of the reagents used were as described in table 1 below.

The average diameter of the self-healing microcapsules of the present disclosure was 2.5 µm as determined by SEM.

### Example 1: Synthesis of microcapsules of PMMA and nanoclay, comprising a corrosion inhibitor as active agent (PMMA-Inh10.Cl6)

Microcapsules were obtained by a suspension polymerization process.

In particular, a monomer oil phase as organic phase was obtained by mixing 27 g of methyl methacrylate, 3 g of an inhibitor mixture comprising 2-ethylhexhyl phosphate in naphtha, and 1.08 g of LPO as initiator of polymerization.

To prepare the aqueous phase 3 g of polyvinyl alcohol and 1.8 g of cloisite 30B were added to 270 mL of water.

Then, both phases were transferred to a polymerization reactor equipped with reflux condenser, turbine stirrer with fourth blades, sampling device and nitrogen inlet. The reactor was heated to a predetermined temperature of 70° C. The stirring speed was 250rpm. The time of the polymerization was 6 hours.

Subsequently, the thus obtained microcapsule suspension was filtered.

The average diameter of the self-healing microcapsules of the present disclosure was 200 µm as determined by SEM.

### Example 2: Synthesis of microcapsules of PMMA and nanoclay, comprising a corrosion inhibitor as active agent (PMMA-Inh10.Cl10)

Microcapsules were obtained following the same procedure described for example 1 with the exception that the quantities of the reagents used were varied as described in table 1 below.

The average diameter of the self-healing microcapsules of the present disclosure was 200 µm as determined by SEM.

### Example 3: Synthesis of microcapsules of PMMA, a cross linker and nanoclay comprising a corrosion inhibitor as active agent (PMMA.PETRA-Inh50.Cl6)

Microcapsules were obtained following the same procedure described for example 1 with the exception that PETRA was further added to prepare the organic phase. The quantities of each one of the reagents used were as described in table 1 below.

The average diameter of the self-healing microcapsules of the present disclosure was 1 µm as determined by SEM.

The Table 1 below illustrates the quantities of each reagent used in examples and comparative examples above described:

| **Reference** | **MMA (g)** | **PETRA (g)** | **inhibitor mixture^{(*)} (g)** | **LPO (g)** | **PVA (g)** | **Cloisite30 B (g)** | **Water (g)** |
|---|---|---|---|---|---|---|---|
| CE 1 (PMMA) | 30 | | | 1.2 | 3 | | 270 |
| CE2 (PMMA-lnh10) | 27 | | 3 | 1.08 | 3 | | 270 |
| CE 3 (PMMA.PETRA-Inh50) | 21 | 9 | 30 | 1.2 | 4.5 | | 270 |
| E1 (PMMA-Inh10.Cl6) | 27 | | 3 | 1.08 | 3 | 1.8 | 270 |
| E2 (PMMA-Inh10.Cl10) | 27 | | 3 | 1.08 | 3 | 3 | 270 |
| E3 (PMMA.PETRA-Inh50.Cl6) | 21 | 9 | 30 | 1.2 | 4.5 | 3.6 | 270 |

| | | | | | | | |
|---|---|---|---|---|---|---|---|
| (*) Inhibitor mixture is a formulation of 2-ethylhexyl phosphate in naphtha. | | | | | | | |

### Microcapsules characterization

The size and morphology of the microcapsules were analyzed by scanning electron microscopy (SEM) by using a Jeol JSM-5920LV instrument. Samples were measured as dried products. SEM micrographs were obtained using a secondary electron detector. To avoid electron loading of the samples, the surface was sputtered with a gold layer. Different regions were analyzed to assure a representative image.

Thus, the microcapsules obtained in the examples and comparative examples disclosed in Table 1 were characterized by SEM by direct measure of a fraction of the microcapsule's dispersion.

The results obtained by SEM reveal that the microcapsules comprise a polymeric shell and a core comprising the active substance.

Additionally, the elemental content of the microcapsules was determined by ICP-MS by using an ICP-MS by digesting 0.1 g of the microcapsules with 5 mL of HNO₃ concentrated at 240°C and 45 bar (4.5 MPa). The ICP-MS results revealed that the microcapsules according to the invention as described in the examples contain phosphorous, those proving the presence of the active agent (2-ethylhexyl phosphate) in the microcapsules.

### Thermal resistance of microcapsules

The thermal resistance of the microcapsules identified as Ihn-10, Ihn-10.CIo6 and Ihn-10.CIo10, corresponding respectively to references Examples CE2, E1 and E2 (see Table 1 above) was assessed as follows:
The microcapsules were dispersed in atmospheric residue and were heated during one minute at three different temperatures: 250°C, 300°C and 350°C. Afterwards, the samples were cooled and characterized by SEM, following the same method as described above.

It was observed that the microcapsules with cloisite in the surface have a higher thermal resistance. At higher the concentration of cloisite at higher the thermal resistance. Figures 1a-1i shows SEM micrographs obtained for each one of the samples Ihn-10, Ihn-10.CIo6 and lhn-10.Clo10 at different temperatures.

As can be seen in Figures 1a-1i, the microcapsules of sample Ihn-10 (without cloisite) are not stable at a temperature of 250°C (see Fig. 1a), since they lost their form at this temperature, whereas the microcapsules according to the invention (i.e., samples Ihn-10.CIo6 and lhn-10.Clo10) maintain their form at this temperature (see Figs. 1d and 1g, respectively). SEM micrographs provided herein also show that the stability of the microcapsules increases with the amount of cloisite. Thus, the microcapsules of sample Ihn-10.CIo6 (with 6 % of cloisite) lost their form at a temperature of 300 °C (see Fig. 1e), whereas the microcapsules of sample lhn-10.Clo10 (with 10 % of cloisite) were stable at this temperature (see Fig. 1h), and lost their form at a higher temperature of 350 °C (see Fig. 1i).

### Mechanical strength of microcapsules

A 2 wt.% of the microcapsules were dispersed in atmospheric residue.

The mechanical strength was determined by using a rheometer applying different shear stress of 1000 Pa, 4000 Pa, and 8000 Pa at minus 10 °C (-10°C).

A 25mm parallel plate (Stainless steel) was used and a gap of 1 mm. Temperature was set at -10°C to increase the shear stress over the microcapsules.

Figures 2a-2b show the change of shear stress in increasing the shear rate for microcapsules dispersed in atmospheric residue. It was seen as rotational speed is increased both shear rate are shear stress increase.

SEM results clearly show that the capsules containing cloisite (Inh-10.CIo6) maintain the spherical shape even after 8000 Pa of shear stress (see Fig 3h), whereas microcapsules without cloisite (Inh-10) degrade at a shear stress as low as 1000 Pa (see Fig 3b). Then, it was seen that the sample Inh-10.CIo6 has higher mechanical strength than the Ihn.10.

## Claims

1. A microcapsule for controlled release of at least one active agent, wherein said microcapsule comprises a core and a polymeric shell, wherein the polymeric shell comprises a nanocomposite of a (co)polymer of at least one (met)acrylic ester monomer and a nanoclay, preferably an organically modified nanoclay, and the core comprises the at least one active agent and a first carrier.

2. The microcapsule according to claim 1, wherein the (co)polymer of at least one (met)acrylic ester monomer has repeating units of formula 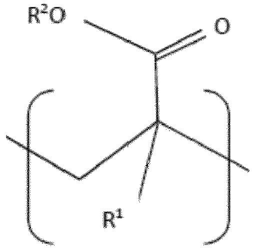 wherein
R¹ is hydrogen or methyl, and
R² is selected from a group consisting of an optionally substituted C₁-C₁₈ alkyl group, an optionally substituted C₆-C₁₀ cycloalkyl group and a glycidyl group.

3. The microcapsule according to claim 1 or claim 2, wherein the nanoclay is a montmorillonite, preferably a montmorillonite modified with a quaternary ammonium salt.

4. The microcapsule according to any one of claims 1 to 3, wherein the nanoclay is present in an amount of about 3 to 15% by weight, preferably of about 6 to 10 % by weight, with respect to the total weight of monomer, active agent in the first carrier and, optionally, crosslinking agent used to obtain the microcapsule by polymerization.

5. The microcapsule according to any one of claims 1 to 4, wherein the active agent is selected from the group consisting of corrosion inhibitors, antioxidants, friction promoters, metal passivators, viscosity modifiers, pour point depressants, antifoulants, defoamers, demulsifiers and a combination thereof.

6. The microcapsule according to any of the preceding claims, wherein the first carrier is a non-polar solvent.

7. A method of preparation of the microcapsule as defined in any one of the claims 1 to 6, wherein the method comprises:
a) obtaining an organic phase comprising at least one (met)acrylic ester monomer, a polymerization initiator and at least one active agent in a first carrier;
b) obtaining an aqueous phase by mixing a stabilizer and a nanoclay with water;
c) mixing the organic phase obtained in step a) and the aqueous phase obtained in step b) at a temperature of about 60°C to about 95°C, by agitation at stirring speed of about 100 rpm to about 1000 rpm, thereby obtaining the microcapsule as defined in any one of claims 1 to 6.

8. The method according to claim 7, wherein the stabilizer is selected from a group consisting of poly(vinyl alcohol) (PVA), poly(vinylpirrolidone) (PVP) and a combination thereof.

9. The method according to claim 7 or claim 8, wherein the stabilizer is present in an amount of about 0.1 wt.% to about 20 wt.% regarding the weight of the organic phase prepared in step a).

10. The method according to any one of claims 7 to 9, wherein the method further comprises adding a crosslinker agent to obtain the organic phase of step a).

11. A microcapsule according to any one of claims 1 to 6, wherein said microcapsule is obtained by the method as defined in any one of the claims 7 to 10.

12. Use of the microcapsules as defined in any of the claims 1 to 6 or 11 for controlled release of active agents, wherein the active agents are selected from the group consisting of corrosion inhibitors, antioxidants, friction promoters, metal passivators, viscosity modifiers, pour point depressants, defoamers, demulsifiers and a combination thereof.

13. The use according to claim 12, wherein the release of the active agent is triggered by thermal activation at a temperature from about 250°C to about 350°C or by mechanical activation at a shear stress higher than about 1000 Pa.

14. Use of the microcapsules as defined in any one of claims 1 to 6 or 11, wherein the active agent is a corrosion inhibitor, to prevent the corrosion in refineries during the processing of crude oil.

15. A method to prevent the corrosion in crude oils refineries comprising:
i) providing a dispersion of the microcapsules as defined in any one of claims 1 to 6 or 11, wherein the active agent is a corrosion inhibitor, in a second carrier; and
ii) injecting the dispersion obtained in step i) in a petroleum stream of the refinery.
